# EUROPÄISCHE PATENTANMELDUNG

(11) **EP 1 245 147 A2**
(43) Veröffentlichungstag der Anmeldung: **02.10.2002**
(21) Anmeldenummer: 02006801.1
(22) Anmeldetag: 25.03.2002
(51) Int. Cl.: A01G 23/00

(54) **Rückezange zum Anbau an ein Zugfahrzeug**

(30) Priorität: 26.03.2001 DE 10114824
(71) Anmelder: Vogl, Susanne, 86899 Landsberg (DE)
(72) Erfinder: Vogl, Susanne, 86899 Landsberg (DE)

(57) **Zusammenfassung**

Die Erfindung betrifft eine Rückezange zum Anbau an ein Zugfahrzeug zum Greifen, Klemmen und Transportieren von Baumstämmen, bei der das nicht im Griff der Rückezange befindliche Stammende hinter dem Zugfahrzeug auf dem Boden gleitet und die dadurch gekennzeichnet ist, daß der im Griff der Rückezange befindliche Baumstamm gezielt in Drehung um seine Längsachse versetzt werden kann und daß durch die daraus resultierende Bewegung des Baumstammes quer zur Fahrtrichtung eine weitgehende Kontrolle über den Baumstamm möglich ist.

## Beschreibung

Die Erfindung betrifft eine Rückezange zum Anbau an ein Zugfahrzeug gemäß dem Oberbegriff des Patentanspruches 1.

Auf dem Gebiet der Forstwirtschaft sind nach dem Stand der Technik diverse Verfahren und Geräte bekannt, mittels denen es in Kombination mit einem Zugfahrzeug möglich ist, Baumstämme zu transportieren.

Eines der Verfahren besteht darin, den liegenden Baumstamm bzw. die Baumstämme mit einer Vorrichtung im Bereich des einen Stammendes zu greifen und den oder die Baumstämme hinter dem Zugfahrzeug herzuziehen.
Das nicht im Griff der Vorrichtung befindliche Stammende gleitet dabei auf dem Boden hinter dem Zugfahrzeug her.

Als Vorrichtungen nach dem Stand der Technik sind zum einen Lastaufnahmemittel, z. B. Ketten, Seile oder dergleichen bekannt, mittels denen der Baumstamm direkt oder über eine angebaute Seilwinde mit dem Zugfahrzeug verbunden wird. Andererseits sind beispielsweise aus DE 37 44 675 sogenannte Rückezangen bekannt, die direkt am Zugfahrzeug oder an Kranauslegern angebaut und in der Lage sind, einen oder mehrere Baumstämme zu greifen.

Den Vorrichtungen nach dem Stand der Technik ist gemeinsam, daß sie nur eine Kontrolle auf den Bereich des Baumstammes ausüben, der sich im Griff der erwähnten Vorrichtung befindet.
Das hinter dem Zugfahrzeug hergleitende Ende des Stammes kann sich je nach Beschaffenheit des Untergrundes und des Bewuchses seitlich frei bewegen.
Dabei kommt es häufig vor, daß bei Kurvenfahrt unter beengten Verhältnissen durch das freie Ende des Baumstammes bzw. der Baumstämme der stehende Baumbestand in unerwünschter Weise beschädigt wird
Desweiteren ist es mit Vorrichtungen nach dem Stand der Technik nur bedingt möglich, den Baumstamm exakt an einer definierten Stelle abzulegen, da das freie Stammende nicht unter der Kontrolle des Fahrzeugführers des Zugfahrzeuges ist.

Der vorliegenden Erfindung liegt die Aufgabe zugrunde, eine Vorrichtung zu schaffen, mittels der die Kontrolle des Fahrzeugführers über die freien Enden der transportierten Baumstämme verbessert wird, wodurch sich Rückeschäden weitgehend vermeiden lassen und eine exakte Ablage der Baumstämme an einem definierten Platz möglich ist.

Die Lösung dieser Aufgabe erfolgt durch eine Rückezange, welche die im kennzeichnenden Abschnitt des Patentanspruchs 1 angeführten Merkmale aufweist.

Erfindungsgemäß wird vorgeschlagen, die Rückezange zum Greifen des BaumStammes oder der Baumstämme so auszuführen, daß der Baumstamm beim Ziehen durch das Zugfahrzeug oder auch beim Stillstand des Zugfahrzeuges durch den Fahrzeugführer gezielt in Rotation um die Längsachse des Baumstammes oder eine dazu leicht schräge oder versetzte Achse gebracht werden kann.
Dadurch kann das freie Ende des Baumstammes oder der Baumstämme durch Abrollen auf dem Untergrund gezielt quer zur Fahrtrichtung bewegt werden.

Die Erfindung wird anhand von Zeichnungen näher erläutert.

Es zeigen:
**Fig.1** die Arbeitsweise der erfindungsgemäßen Rückezange zur Vermeidung von Rückeschäden;
**Fig. 2** die Arbeitsweise der erfindungsgemäßen Rückezange zur Erzielung einer punktgenauen Ablage der Baumstämme;
**Fig. 3** ein Ausführungsbeispiel der Erfindung mit Anordnung der Greiferbacken an einem Ausleger;
**Fig. 4** ein Ausführungsbeispiel der Erfindung mit Anordnung der Greiferbacken direkt an der Drehachse;
**Fig. 5** ein Ausführungsbeispiel einer in sich nicht rotierenden Rückezange, wobei der Baumstamm mittels einer reibradähnlichen Anordnung in Rotation versetzt wird;
**Fig. 5a** einen Schnitt durch die Darstellung in **Fig. 5;**
**Fig. 6** ein Ausführungsbeispiel einer ebenfalls in sich nicht rotierenden Rückezange, wobei der Baumstamm durch Antriebsbänder in Rotation versetzt wird;
**Fig. 6a** einen Schnitt durch die Darstellung in **Fig. 6;**
**Fig. 7** eine weitere Einsatzmöglichkeit der Rückezange als sogenannte Klemmbank.

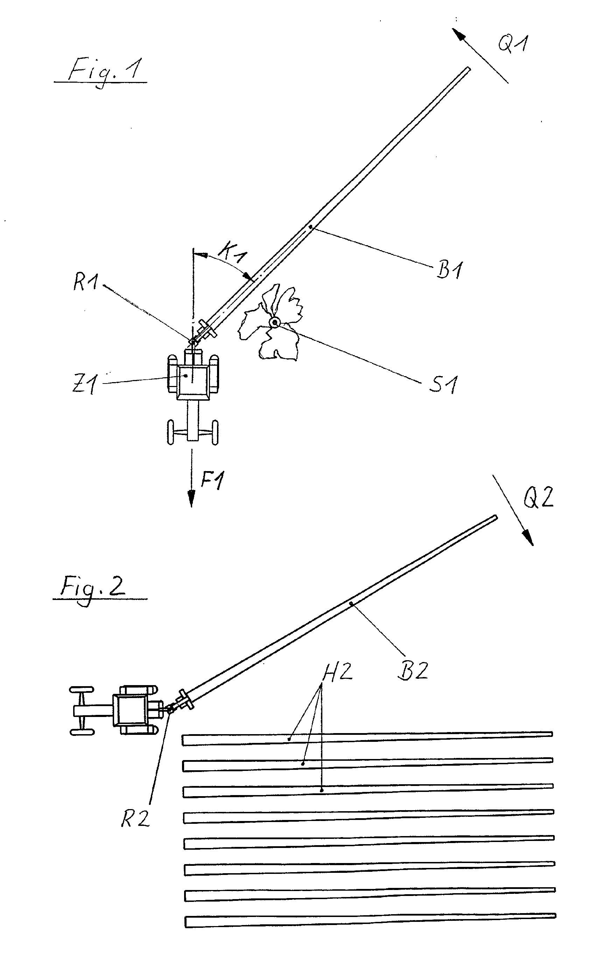

**Fig. 1** stellt die erfindungsgemäße Rückezange **(R1)** beim Rücken eines Baumstammes **(B1)** dar. Dabei ist der Zugschlepper **(Z1)** nach Durchfahren einer Kurve dargestellt, so daß noch ein Knickwinkel **(K1)** des Gespannes bestehend aus Zugschlepper **(Z1)** und Baumstamm **(B1)** besteht.
Bei Weiterfahrt des Zugschleppers **(Z1)** in die dargestellte Fahrtrichtung **(F1)** würde eine Kollision zwischen Baumstamm **(B1)** und noch stehendem Stamm **(S1)** erfolgen, was eine unerwünschte Beschädigung des letzteren zur Folge hätte.
Durch Verwendung der erfindungsgemäßen Rückezange **(R1)** ist es möglich, durch geeignete Rotation des Baumstammes **(B1)** um seine Längsachse eine Querbewegung **(Q1)** desselben zu erzeugen, wodurch der stehende Stamm **(S1)** umfahren und vor Schaden bewahrt wird

**Fig. 2** zeigt die Rückezange **(R2)** bei der Ablage des Baumstammes **(B2)** neben bereits lagernden Holzstämmen **(H2).**
Da es in der Praxis nur in den seltensten Fällen möglich ist, ausreichend nahe an die lagernden Holzstämme **(H2)** heranzufahren, muß der Baumstamm (**B2**) bei Verwendung einer konventionellen Rückezange in größerem Abstand zu den lagernden Holzstämmen **(H2)** abgelegt und in einem weiteren Arbeitsgang, dem sogenannten Poltern in die endgültige Lage gebracht werden.
Mit der erfindungsgemäßen Rückezange **(R2)** ist es wiederum möglich, bereits vor dem Ablegen des Baumstammes **(B2)** diesen durch geeignete Rotation in eine Querbewegung **(Q2)** zu versetzen und in die endgültige Lage zu bringen.
Der folgende Arbeitsgang des Polterns kann somit in vielen Fällen entfallen.

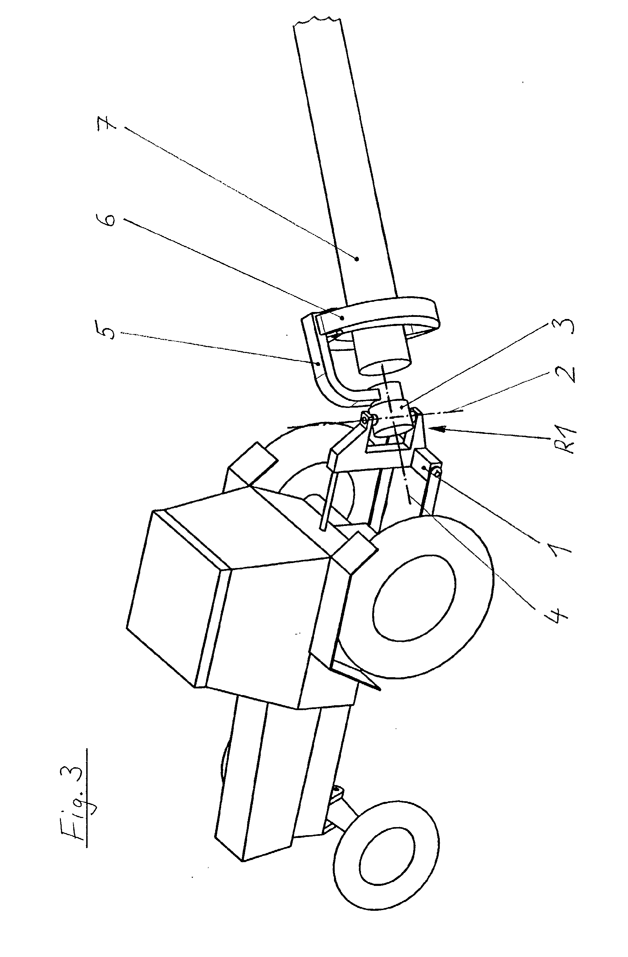

In **Fig. 3** ist eine erste Ausführungsform der erfindungsgemäßen Rückezange (**R1**) dargestellt. Dabei besteht die Rückezange (**R1**) aus einem Grundrahmen **(1),** der in der Darstellung als 3-Punkt-Anbaubock ausgeführt ist.
Im Grundrahmen ist der um eine im wesentlichen vertikale Achse **(2)** drehbar gelagerte Lagerbock **(3)** befestigt.
Der Lagerbock **(3)** seinerseits weist eine im wesentlichen horizontale Drehachse **(4)** auf, um die eine am Lagerbock **(3)** befestigte Einheit bestehend aus Ausleger **(5)** und Greiferbacken **(6)** drehbar ist.
Die Drehbewegung kann beispielsweise durch Druckmittel, elektrisch oder mechanisch auf den Ausleger **(5)** übertragen werden.
Durch den rotierenden Ausleger **(5)** wird somit auch der sich im Griff der Greiferbacken **(6)** befindliche Baumstamm **(7)** gezielt in Rotation versetzt und entsprechend quer zur Fahrtrichtung versetzt.

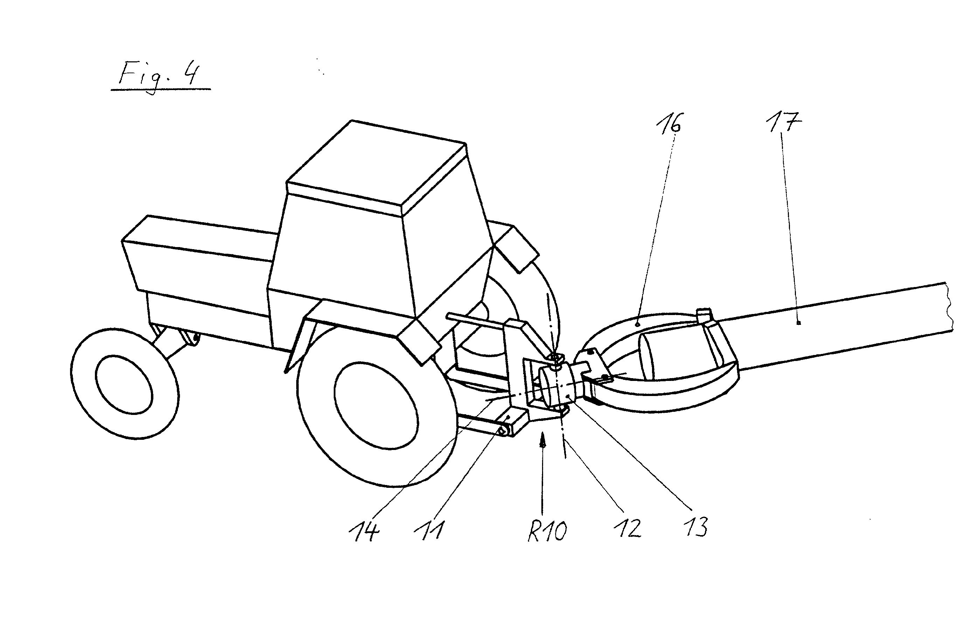

**Fig. 4** zeigt eine zweite Ausführungsform der erfindungsgemäßen Rückezange **(R10),** wobei die Greiferbacken **(16)** direkt um eine im wesentlichen horizontale Achse **(14)** drehbar am Lagerbock **(13)** angebaut sind.
Der Lagerbock **(13)** wiederum ist um eine im wesentlichen vertikale Achse **(12)** drehbar im Grundrahmen **(11)** aufgehängt.
Somit besteht auch hier die Möglichkeit, bei Rotation der Greiferbacken **(16)** um die gemeinsame horizontale Achse **(14)** den Baumstamm **(17)** in gezielte Rotation zu versetzen und so definierte Bewegungen quer zur Fahrtrichtung zu erzeugen.

In **Fig**. **5** ist eine erfindungsgemäße Rückezange **(R20)** dargestellt, bei der nicht die Greiferbacken **(26)** in Rotation versetzt werden können.
Stattdessen steht der zwischen den Greiferbacken **(26)** geklemmte Baumstamm **(27)** in reib- oder formschlüssiger Verbindung zu an den Greiferbacken **(26)** befindlichen Antriebswalzen **(28).**

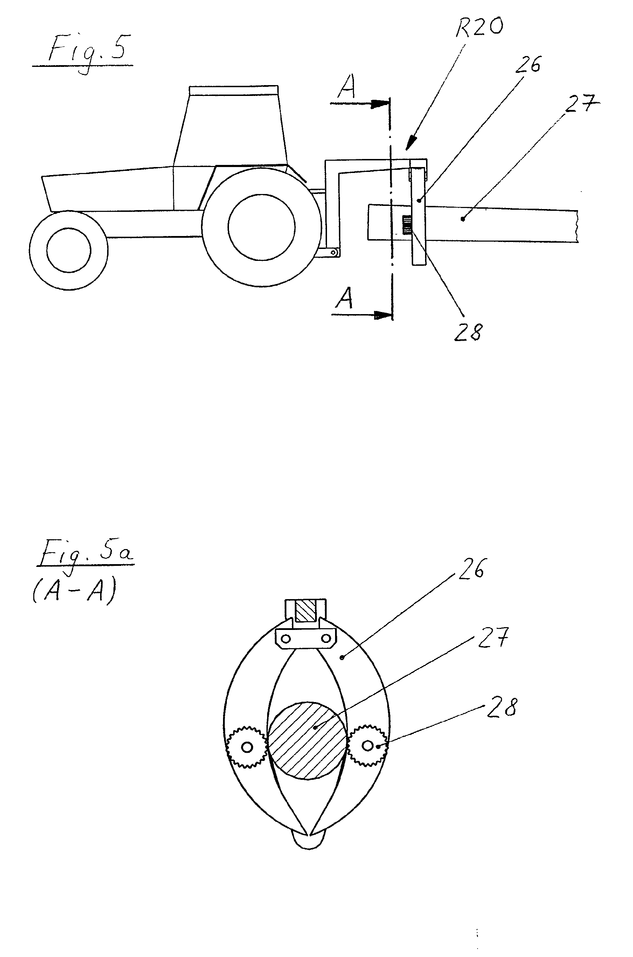

**Fig. 5a** zeigt als Schnitt aus **Fig. 5** die Anordnung zwischen Baumstamm **(27)** und Antriebswalzen **(28).** Durch Rotation der Antriebswalzen **(28)** um ihre Achse wird auch der Baumstamm **(27)** in gezielte Rotation um seine Längsachse versetzt, wobei er innerhalb der Greiferbacken **(26)** gleitet.
Die Antriebswalzen **(28)** werden vorzugsweise durch Druckmittel, elektrisch oder mechanisch angetrieben.

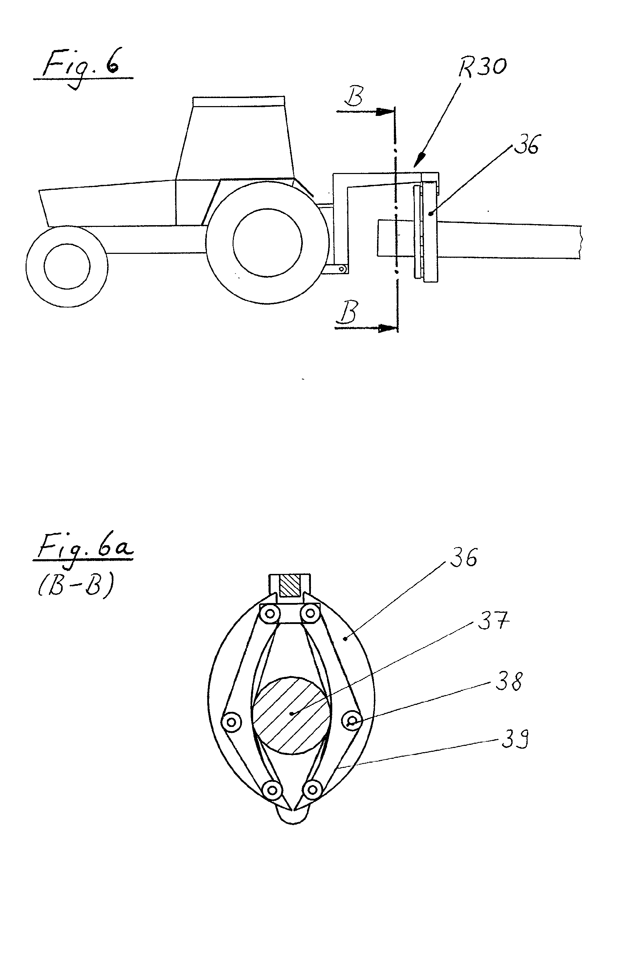

**Fig. 6** stellt eine erfindungsgemäße Rückezange **(R30)** dar, bei der ebenfalls nicht die Greiferbacken **(36)** in Rotation versetzt werden können.
Wie in **Fig. 6a** als Schnitt durch **Fig. 6** zu sehen ist, steht stattdessen der zwischen den Greiferbacken **(36)** geklemmte Baumstamm **(37)** in reib- oder formschlüssiger Verbindung zu an den Greiferbacken **(36)** befindlichen Antriebsbändern **(39)**.
Die Antriebsbänder **(39)** sind über Antriebswalzen **(38)** geführt und werden von allen oder nur einer der Antriebswalzen **(38)** durch Druckmittel, elektrisch oder mechanisch angetrieben.
Dadurch wird der Baumstamm **(37)** in gezielte Rotation um seine Längsachse versetzt, wobei er wiederum innerhalb der Greiferbacken **(36)** gleitet.

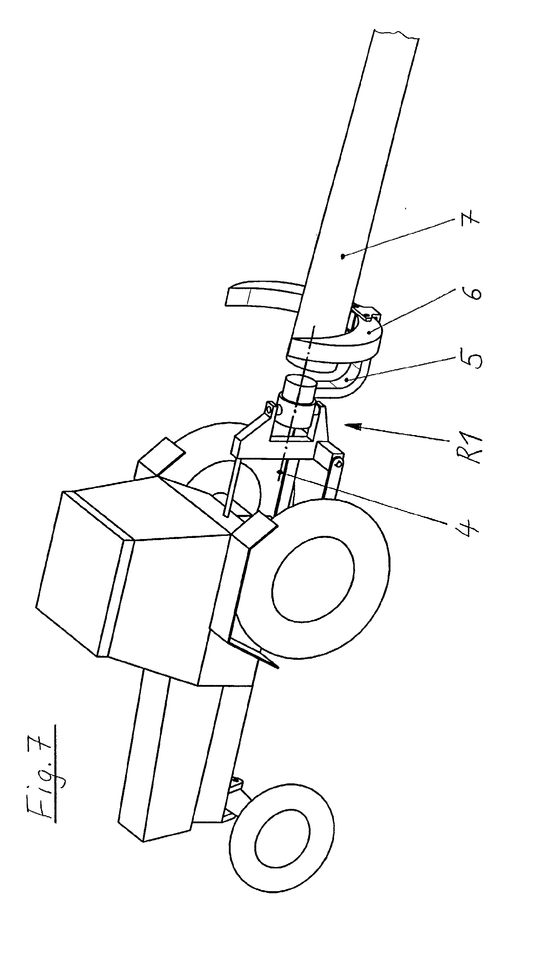

**Fig. 7** zeigt schließlich die Rückezange **(R1)** aus **Fig. 3** im Einsatz als sogenannte Klemmbank.
Dazu ist der Ausleger **(5)** gegenüber der Darstellung in **Fig. 3** um die im wesentlichen horizontale Drehachse **(4)** um 180° gedreht, so daß die Öffnung zwischen den Greiferbacken **(6)** zur Aufnahme des Baumstammes **(7)** oder der Stämme nach oben weist.
So ist es möglich, mittels eines separaten Hubgerätes Baumstämme in die Rückezange **(R1)** zu legen, diese durch die Greiferbacken **(6)** zu klemmen und mittels des Zugfahrzeuges, an dem sich die Rückezange befindet, zu transportieren.

## Patentansprüche

1. Rückezange zum Anbau an ein Zugfahrzeug mit Greiferbacken zum Greifen, Klemmen und Transportieren von Baumstämmen, **dadurch gekennzeichnet, daß** der im Griff der Rückezange befindliche Baumstamm durch die Rückezange definiert in Rotation um dessen Längsachse versetzt werden kann.

2. Rückezange nach Anspruch 1, **dadurch gekennzeichnet, daß** mehrere Baumstämme gleichzeitig transportiert und in Rotation versetzt werden können.

3. Rückezange nach den Ansprüchen 1 und 2, **dadurch gekennzeichnet, daß** die Rotation der Baumstämme um eine zur Achse des Einzelstammes versetzte Rotationsachse erfolgt.

4. Rückezange nach den Ansprüchen 1 bis 3, **dadurch gekennzeichnet, daß** durch die Rotation der Baumstämme am auf dem Boden liegenden Baumende eine Querbewegung zur Längsachse der Baumstämme erzeugt wird.

5. Rückezange nach den Ansprüchen 1 bis 4, **dadurch gekennzeichnet, daß** die Rückezange bei entsprechender Drehung als Klemmbank verwendbar ist.

6. Rückezange nach den Ansprüchen 1 bis 5, **dadurch gekennzeichnet, daß** die definierte Drehbewegung der Rückezange durch Druckmittel erzeugt wird.

7. Rückezange nach den Ansprüchen 1 bis 5, **dadurch gekennzeichnet, daß** die definierte Drehbewegung der Rückezange elektrisch erzeugt wird.

8. Rückezange nach den Ansprüchen 1 bis 5, **dadurch gekennzeichnet, daß** die definierte Drehbewegung der Rückezange mechanisch übertragen wird.

9. Rückezange nach den Ansprüchen 1 bis 8, **dadurch gekennzeichnet, daß** damit langgestreckte Körper aller Art transportiert werden.
